# EUROPEAN PATENT SPECIFICATION

(11) **EP 3 612 418 B1**
(45) Date of publication and mention of the grant of the patent: **11.08.2021**
(21) Application number: 16816130.5
(22) Date of filing: 06.12.2016
(51) Int. Cl.: B60S 1/48, B60S 1/08, B60R 1/04

(54) **SYSTEM AND METHOD FOR RESPONDING TO AN ERROR FROM A CAMERA ON A VEHICLE**
SYSTEM UND VERFAHREN ZUM REAGIEREN AUF EINEN FEHLER AUS EINER KAMERA AN EINEM FAHRZEUG
SYSTÈME ET PROCÉDÉ SERVANT À RÉPONDRE À UNE ERREUR EN PROVENANCE D'UNE CAMÉRA SUR UN VÉHICULE

(30) Priority: 18.12.2015 US 201514974406
(43) Date of publication of application: 26.02.2020
(73) Proprietor: Bendix Commercial Vehicle Systems, LLC, Elyria, Ohio 44035 (US)
(72) Inventor: MILLER, Justin, R., Elyria OH 44035 (US)
(74) Representative: LifeTech IP Spies & Behrndt Patentanwälte PartG mbB
(86) International application number: PCT/US2016/065138
(87) International publication number: WO 2017/105923

(56) References cited:
- EP-A1- 2 871 101
- EP-A1- 2 873 572
- US-A1- 2007 115 357
- US-A1- 2011 266 375

## Description

### Background

The present invention relates to a vehicle including a camera. It finds particular application in conjunction with controlling at least one vehicle accessory for clearing an obstruction in the camera's view and will be described with particular reference thereto. It will be appreciated, however, that the invention is also amenable to other applications.

It is becoming more common to include visual detectors (e.g., cameras) on vehicles. The visual detectors may be located inside the vehicle (e.g., inside a cab of a truck) and obtain image data for views exterior to the vehicle by "looking" through a window of the vehicle. Visibility limitations may occur if moisture and/or other debris accumulates on either an interior portion or an exterior portion of the window at which the camera is pointed. The accumulated moisture and/or debris obstructs the view of the camera.

The camera may enter into a fault or degraded performance state when the optical/visual field becomes obstructed. If the window through which the camera is obtaining the exterior view is the front windshield (or other visually transparent surfaces such as side windows), actions may be taken to clear or remove the obstruction. USA-2007/0115357 shows the preamble of claims 1, 11 and 12.

The present invention provides a new and improved apparatus and method for clearing or removing obstructions from a window when the optical/visual field of a camera becomes obstructed.

### Summary

The invention is defined in claims 1, 11 and 12. In one aspect, it is contemplated that responding to an error from a camera on a vehicle includes identifying the error as being associated with an obstructed visual image received by the camera. If the error is associated with the obstructed visual image: at least one vehicle accessory is either activated or continued to be activated for removing an obstruction on a window of the vehicle; after the activation or the continued activation of the at least one vehicle accessory, a determination is made whether the error persists for a predetermined error time period or a predetermined duration; if the error persists for the predetermined error time period, up to a predetermined number of times i) the activation or continued activation is repeated and ii) the determination is repeated. If the error persists after the predetermined number of times or the duration, the at least one vehicle accessory is deactivated and an operator of the vehicle is alerted that the error persists.

### Brief Description of the Drawings

In the accompanying drawings which are incorporated in and constitute a part of the specification, embodiments of the invention are illustrated, which, together with a general description of the invention given above, and the detailed description given below, serve to exemplify the embodiments of this invention.
**FIGURE 1** illustrates a representation of a vehicle including at least one camera in accordance with one embodiment of an apparatus illustrating principles of the present invention;
**FIGURE 2** illustrates a component representation of the vehicle in accordance with one embodiment of an apparatus illustrating principles of the present invention; and
**FIGURE 3** is an exemplary methodology for responding to an error code from the camera in accordance with one embodiment illustrating principles of the present invention.

### Detailed Description of Illustrated Embodiment

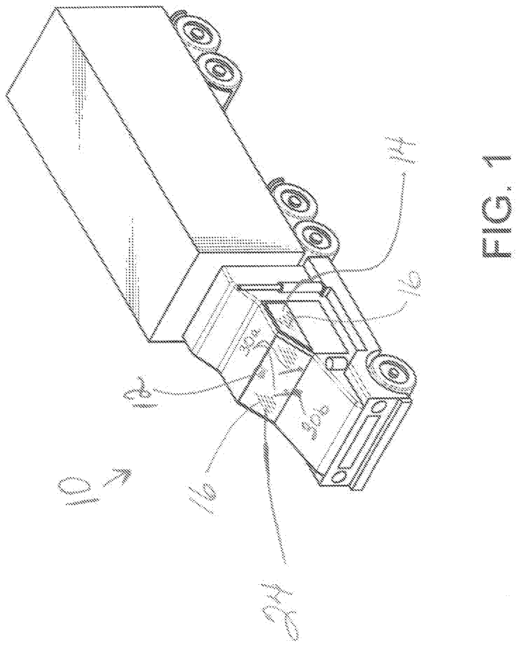

With reference to **FIGURE 1**, a vehicle **10** includes at least one visual detector **12** (e.g., camera) as part of, for example, safety systems on the vehicle **10.** In one embodiment, at least one of the cameras **12** is located within a driver compartment **14** (e.g., cab) of the vehicle **10** and obtains image data for views exterior to the vehicle **10** by "looking" through a window **16** and/or reflections in a side mirror of the vehicle **10.** Visibility limitations may occur if moisture and/or other debris accumulates on either an interior portion or an exterior portion of the window **16** at which the camera **12** is pointed. The moisture and/or debris may accumulate to the point of obstructing the view of the camera **12** to the exterior portion of the window **16.**

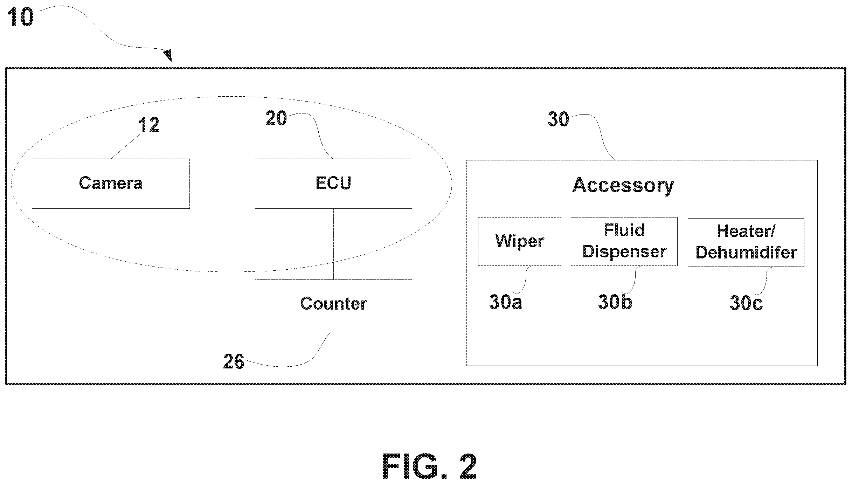

With reference to **FIGURES 1** **and** **2**, the camera **12** electronically communicates with an electronic control unit **20** (ECU) (e.g., a controller) via, for example, a communication bus **22** on the vehicle **10.** As illustrated by the dashed line around the camera **12** and the ECU **20** in **FIGURE 2**, it is contemplated in one embodiment that the camera **12** and the ECU **20** are included as a single component. Other embodiments, in which the camera **12** and the ECU **20** are separate components are also contemplated. The camera **12** enters into a fault or degraded performance state when the optical/visual field becomes obstructed because of moisture and/or debris accumulation on the window **16..** If the window **16** through which the camera is obtaining the exterior view is a front windshield window **24**, actions may be taken to clear or remove the obstruction.

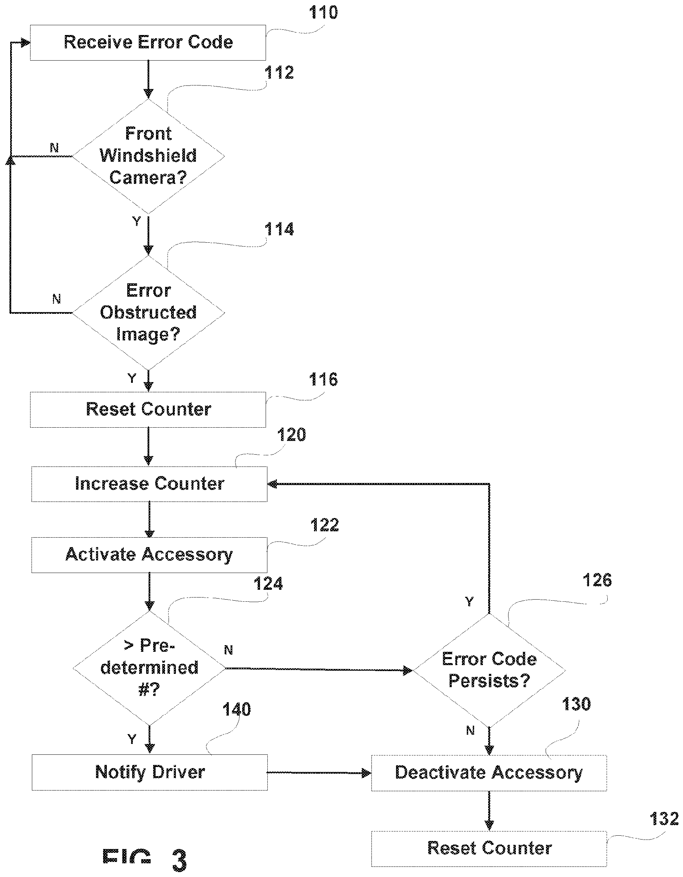

With reference to **FIGURE 3**, an exemplary methodology for responding to an error code from the camera is illustrated. As illustrated, the blocks represent functions, actions and/or events performed therein. It will be appreciated that electronic and software systems involve dynamic and flexible processes such that the illustrated blocks and described sequences can be performed in different sequences. It will also be appreciated by one of ordinary skill in the art that elements embodied as software may be implemented using various programming approaches such as machine language, procedural, object-oriented or artificial intelligence techniques. It will further be appreciated that, if desired and appropriate, some or all of the software can be embodied as part of a device's operating system.

With reference to **FIGURES 1-3****,** in a step **110**, the error code from the camera **12** is received in the ECU **20** on the vehicle **10.** In a step **112**, a determination is made by the ECU **20** whether the error code is from one of the cameras **12** obtaining an image through the front windshield **24.** If it is determined in the step **112** that the image is not from one of the cameras **12** obtaining an image through the front windshield **24**, control returns to the step **110**; otherwise, control passes to a step **114.** In the step **114**, a determination is made by the ECU **20** whether the error code is associated with an obstructed visual image. It is contemplated that the at least one camera **12** generates the error code indicating the visual image is obstructed if at least a predetermined portion (e.g., 30%) of the image is blurred and/or obstructed. If it is determined in the step **114** that the error code is not associated with an obstructed visual image, control returns to the step **110**; otherwise, control passes to a step **116.** In the step **116**, a counter **26** is reset (e.g., set to zero) by the ECU **20.** Although the counter **26** is illustrated as a separate component communicating with the ECU **20** via the communication bus **22**, it is also contemplated that the counter **26** is included as part of the ECU **20.**

The counter **26** is then increased by the ECU **20**, for example, by one (1) in a step **120.** Then, in a step **122**, at least one vehicle accessory **30** is activated (e.g., automatically activated) by the ECU **20** for a predetermined error time period (e.g., ten (10) seconds) or a predetermined number of times (e.g., five (5)) as an attempt to remove the obstruction on the windshield **24.** In one embodiment, the activating step **122** includes activating (e.g., automatically activating, manually activating by a switch, etc.) at least one of a windshield wiper **30a**, a washer fluid dispenser **30b**, and a heater/dehumidifier **30c.** The windshield wiper **30a**, the washer fluid dispenser **30b**, and the heater/dehumidifier **30c** are collectively referenced as the at least one vehicle accessory **30.**

The windshield wiper **30a** and/or washer fluid dispenser **30b** are activated (e.g., automatically activated) by the ECU **20** for wiping and/or dispensing fluid on an exterior of the windshield **24** of the vehicle **10.** When activated, the washer fluid dispenser **30b** acts to spray washer fluid on the exterior of the windshield **24.** The windshield wiper **30a** then wipes the windshield **24**, which acts to spread the fluid across the path of the windshield wiper **30a** on the windshield **24.** The fluid works with the windshield wiper **30a** to remove the obstruction from the windshield **24.** When activated, the heater/dehumidifier **30c** acts to at least one of warm the interior and exterior of the windshield **24** and dehumidify the interior of the windshield **24.**

As is commonly understood, the windshield wiper **30a** and washer fluid dispenser **30b** are positioned to wipe and dispense fluid, respectively, on the exterior portion of the windshield **24** of the vehicle **10.** The heater/dehumidifier **30c** acts to blow warm and/ or dehumidified air on the interior portion of the windshield **24** of the vehicle **10.** The warm and/or dehumidified air blown on the interior portion of the windshield **24** acts to also warm the exterior portion of the windshield **24.**

In one embodiment, it is contemplated that if the counter **26** is one (1), only the windshield wiper **30a** is activated by the ECU **20** in the step **122** for attempting to remove the obstruction. If the counter is two (2), both the windshield wipers **30a** and the washer fluid dispenser **30b** are activated by the ECU **20** in the step **122.** If the counter is greater than or equal to three (3), the windshield wipers **30a**, the washer fluid dispenser **30b**, and the heater/dehumidifier **30c** are activated by the ECU **20** in the step **122.** The heater/ dehumidifier **30c** is positioned inside the vehicle cab **14** for warming and dehumidifying the interior of the windshield **24** and warming the exterior of the windshield **24** to, for example, melt ice and/or snow on the exterior of the windshield **24.** It is contemplated that activating the washer fluid dispenser **30b** to spray fluid on the exterior of the windshield **24** also may act to melt ice and/or snow on the exterior of the windshield **24.**

After activating the at least one accessory **30** in the step **122** for the predetermined error time period or the predetermined number of times, a determination is made by the ECU **20** in a step **124** whether the counter is greater than a predetermined number (e.g., five (5)). If it is determined in the step **124** that the counter is not greater than the predetermined number, control passes to a step **126** for determining by, for example, the ECU **20** if the error code persists (e.g., if the obstruction remains on the windshield **24**) after the predetermined error time period. If it is determined in the step **126** that the error code still persists after the predetermined error time period, control returns to the step **120** for increasing the counter **26.** Otherwise, if the error code no longer persists after the predetermined error time period, control passes to a step **130.**

In the step **130**, the at least one vehicle accessory **30** is deactivated by the ECU **20.** Optionally, the counter is reset by the ECU **20** in a step **132.**

If, in the step **124** it is determined that the counter **26** is greater than the predetermined number, it is determined that the obstruction on the windshield **24** has not been removed after the at least one vehicle accessory has been activated the predetermined number of times for the predetermined error time period. Therefore, control passes to a step **140.** In the step **140**, an operator (e.g., driver) of the vehicle **10** is notified by the ECU **20** that the obstruction on the windshield **24** has not been removed. For example, a light is illuminated on a dashboard of the vehicle, an audible signal is activated in the vehicle cab **14** and/or a textual message is displayed on the dashboard.

Control then passes to the step **130** for deactivating the at least one vehicle accessory **30** by the ECU **20.** Since it is assume at this point that the obstruction on the windshield **24** will not be removed by activating the at least one accessory **30**, along with alerting driver that the obstruction on the windshield **24** has not been removed, the at least one vehicle accessory **30** is deactivated in the step **130**.

The ECU **20** acts as a means for identifying the error as being associated with an obstructed visual image received by the camera, a means for activating at least one vehicle accessory for removing an obstruction on a window of the vehicle, a means for determining if the error persists for a predetermined error time period, a means for continuing to activate the vehicle accessory and repeating the activation, a means for repeating the determination up to a predetermined number of times, a means for deactivating the vehicle accessory, and a means for alerting an operator of the vehicle that the error persists. The ECU **20** also acts as a means for activating the at least one vehicle accessory based on a number of times the activation has been continued or repeated.

While the present invention has been illustrated by the description of embodiments thereof, and while the embodiments have been described in considerable detail, it is not the intention of the applicants to restrict or in any way limit the scope of the appended claims to such detail. Additional advantages and modifications will readily appear to those skilled in the art. Therefore, the invention, in its broader aspects, is not limited to the specific details, the representative apparatus, and illustrative examples shown and described.

## Claims

1. A method for responding to an error code from a camera on a vehicle, the method comprising:
identifying the error as being associated with an obstructed visual image received by the camera;
if the error is associated with the obstructed visual image:
one of activating and continuing activation of at least one vehicle accessory for removing an obstruction on a window of the vehicle;
after the one of the activation and the continued activation of the at least one vehicle accessory, determining if the error persists for a predetermined error time period; and
if the error persists for the predetermined error time period, up to a predetermined number of times or a predetermined duration i) repeating the one of activating and continuing activation step and ii) repeating the determining step, wherein the one of activating and continuing activation step includes:
activating the at least one vehicle accessory based on a number of times or duration the one of activating and continuing activation step has been performed; and
if the error persists after the predetermined number of times or the duration:
deactivating the at least one vehicle accessory; and
alerting an operator of the vehicle that the error persists,
**characterized in that**
the activating the at least one vehicle accessory based on a number of times or duration the one of activating and continuing activation step has been performed includes:
activating only a windshield wiper the first time the one of activating and continuing activation step is performed;
activating only the windshield wiper and a washer fluid dispenser a second time the one of activating and continuing activation step is performed; and
activating the windshield wiper, the washer fluid dispenser and a heater/dehumidifier after the second time the one of activating and continuing activation step is performed.

2. The method for responding to an error code from a camera on a vehicle as set forth in claim 1, further including:
identifying the visual image received by the camera as obstructed if less than a predetermined portion of an object identified in the visual image is correlated to a known object.

3. The method for responding to an error code from a camera on a vehicle as set forth in claim 1, wherein the activating step includes:
in response to a control signal or a switch activation, activating at least one of a windshield wiper and a washer fluid dispenser.

4. The method for responding to an error code from a camera on a vehicle as set forth in claim 1, wherein the activating step includes:
in response to a control signal or a switch activation, activating a mirror heater/ dehumidifier.

5. The method for responding to an error code from a camera on a vehicle as set forth in claim 1, further including if the error is associated with the obstructed visual image:
deactivating the at least one vehicle accessory at the end of the predetermined error time period.

6. The method for responding to an error code from a camera on a vehicle as set forth in claim 1:
further including before the first activating step:
setting at least one of a counter and a timer to zero; and
further including prior to each time the activation step is performed: at least one of increasing the counter by one and determining if the timer is expired.

7. The method for responding to an error code from a camera on a vehicle as set forth in claim 6, further including if the error does not persist for the predetermined error time period after any of the determining steps:
deactivating the at least one vehicle accessory.

8. The method for responding to an error code from a camera on a vehicle as set forth in claim 1, further including if the error does not persist for the predetermined error time period after any of the determining steps:
deactivating the at least one vehicle accessory.

9. The method for responding to an error code from a camera on a vehicle as set forth in claim 1, wherein the alerting step includes:
illuminating at least one of a light on a dashboard of a vehicle, activating an audible signal, and displaying a textual message on the dashboard.

10. The method for responding to an error code from a camera on a vehicle as set forth in claim 1, further including:
setting the predetermined number of times to 5.

11. A controller for responding to an error from a camera on a vehicle, the controller being adapted to:
identify the error as being associated with an obstructed visual image received by the camera;
if the error is associated with the obstructed visual image, the controller being adapted to:
transmit a control signal to at least one of activate and continue to activate at least one vehicle accessory for removing an obstruction on a window of the vehicle;
after the one of activation and continued activation of the at least one vehicle accessory, determine if the error persists for a predetermined error time period; and
if the error persists for the predetermined error time period, up to a predetermined number of times or a predetermined duration i) repeat the one of activation and continued activation and ii) repeat the determination, wherein the controller is adapted to: activate the at least one vehicle accessory based on a number of times one of the activation and the continued activation has been performed; and
if the error persists for the predetermined error time period after the predetermined number of times or the predetermined durations, the controller being adapted to:
deactivate the at least one vehicle accessory; and
transmit a signal to alert an operator of the vehicle that the error persists,
**characterized in that**
the controller is adapted to:
activate only a windshield wiper the first time the one of activation and the continued activation is performed;
activate only the windshield wiper and a washer fluid dispenser a second time the one of the activation and the continued activation is performed; and
activate the windshield wiper, the washer fluid dispenser and a heater/dehumidifier after the second time the one of the activation and the continued activation is performed.

12. A controller for controlling at least one vehicle accessory, the controller being adapted to:
receive an error code from a vehicle camera;
set a counter to zero;
if the error code is associated with an obstructed visual image, until one of i) the error code ceases within a predetermined error time period after activation or continued activation of the at least one vehicle accessory and ii) the counter is greater than or equal to a predetermined count, the controller being adapted to repeatedly:
increment a count of the counter;
one of i) activate the at least one vehicle accessory and ii) continue the activation of the at least one vehicle accessory based on the count of the counter; and if the error code ceases within the predetermined error time period and the count of the counter is less than the predetermined count, the controller being adapted to:
deactivate the at least one vehicle accessory; and
if the error code does not cease within the predetermined error time period and the count of the counter is greater than or equal to the predetermined count, the controller being adapted to:
deactivate the at least one vehicle accessory; and
alert an operator of the vehicle that the error persists,
**characterized in that**
to activate the at least one vehicle accessory, the controller is further adapted to:
only activate a windshield wiper if the count is one;
only activate the windshield wiper and a washer fluid dispenser if the count is two; and
automatically activate the windshield wiper, the washer fluid dispenser, and a heater/ dehumidifier if the count is greater than two.

13. The controller as set forth in claim 12, wherein if the error code ceases within the predetermined error time period and the count of the counter is less than the predetermined count, the controller being further adapted to:
reset the counter to zero.

## Patentansprüche

1. Verfahren zum Reagieren auf einen Fehlercode von einer Kamera an einem Fahrzeug, wobei das Verfahren Folgendes umfasst:
Identifizieren des Fehlers als ein verdecktes visuelles Bild, das durch die Kamera empfangen wird;
falls der Fehler mit dem verdeckten visuellen Bild zusammenhängt:
Aktivieren oder Fortsetzen einer Aktivierung wenigstens eines Fahrzeugzubehörteils zum Entfernen einer Verdeckung an einem Fenster des Fahrzeugs;
nach der Aktivierung oder der fortgesetzten Aktivierung des wenigstens einen Fahrzeugzubehörteils, Bestimmen, ob der Fehler für einen zuvor bestimmten Fehlerzeitraum bestehen bleibt; und
falls der Fehler für den zuvor bestimmten Fehlerzeitraum bestehen bleibt, bis zu einer zuvor bestimmten Anzahl von Malen oder einer zuvor bestimmten Dauer, i) Wiederholen des Schritts des Aktivierens oder des Fortsetzens der Aktivierung und ii) Wiederholen des Bestimmungsschritts, wobei der Schritt des Aktivierens oder des Fortsetzens der Aktivierung Folgendes umfasst:
Aktivieren des wenigstens einen Fahrzeugzubehörteils basierend darauf, wie oft oder wie lange der Schritt des Aktivierens oder des Fortsetzens der Aktivierung durchgeführt wurde; und
falls der Fehler nach der zuvor bestimmten Anzahl von Malen oder der Dauer bestehen bleibt:
Deaktivieren des wenigstens einen Fahrzeugzubehörteils; und
Warnen eines Anwenders des Fahrzeugs, dass der Fehler bestehen bleibt,
**dadurch gekennzeichnet, dass**
das Aktivieren des wenigstens einen Fahrzeugzubehörteils basierend darauf, wie oft oder wie lange der Schritt des Aktivierens oder des Fortsetzens der Aktivierung durchgeführt wurde, Folgendes umfasst:
Aktivieren nur eines Scheibenwischers, wenn der Schritt des Aktivierens oder des Fortsetzens der Aktivierung zum ersten Mal durchgeführt wird;
Aktivieren nur des Scheibenwischers und eines Waschfluidspenders, wenn der Schritt des Aktivierens oder des Fortsetzens der Aktivierung zum zweiten Mal durchgeführt wird; und
Aktivieren des Scheibenwischers, des Waschfluidspenders und eines Heizers/Entfeuchters nach dem zweiten Mal, wenn der Schritt des Aktivierens oder des Fortsetzens der Aktivierung durchgeführt wird.

2. Verfahren zum Reagieren auf einen Fehlercode von einer Kamera an einem Fahrzeug nach Anspruch 1, das ferner Folgendes beinhaltet:
Identifizieren des visuellen Bildes, das durch die Kamera empfangen wird, als behindert, falls weniger als ein zuvor bestimmter Abschnitt eines Objekts, das in dem visuellen Bild identifiziert wird, einem bekannten Objekt entspricht.

3. Verfahren zum Reagieren auf einen Fehlercode von einer Kamera an einem Fahrzeug nach Anspruch 1, wobei der Aktivierungsschritt Folgendes beinhaltet:
als Reaktion auf ein Steuersignal oder eine Schalteraktivierung, Aktivieren eines Scheibenwischers und/oder eines Waschfluidspenders.

4. Verfahren zum Reagieren auf einen Fehlercode von einer Kamera an einem Fahrzeug nach Anspruch 1, wobei der Aktivierungsschritt Folgendes beinhaltet:
als Reaktion auf ein Steuersignal oder eine Schalteraktivierung, Aktivieren eines Spiegelheizers/-entfeuchters.

5. Verfahren zum Reagieren auf einen Fehlercode von einer Kamera an einem Fahrzeug nach Anspruch 1, das ferner, falls der Fehler mit dem behinderten visuellen Bild verknüpft ist, Folgendes beinhaltet: Deaktivieren des wenigstens einen Fahrzeugzubehörteils an dem Ende des zuvor bestimmten Fehlerzeitraums.

6. Verfahren zum Reagieren auf einen Fehlercode von einer Kamera an einem Fahrzeug nach Anspruch 1:
das ferner vor dem ersten Aktivierungsschritt Folgendes beinhaltet:
Einstellen eines Zählers und/oder eines Zeitgebers auf null; und
das ferner vor jedem Mal, wenn der Aktivierungsschritt durchgeführt wird, Folgendes beinhaltet: Erhöhen des Zählers um eins und/oder Bestimmen, ob der Zeitgeber abgelaufen ist.

7. Verfahren zum Reagieren auf einen Fehlercode von einer Kamera an einem Fahrzeug nach Anspruch 6, das ferner, falls der Fehler nicht für den zuvor bestimmten Fehlerzeitraum bestehen bleibt, nach einem der Bestimmungsschritte Folgendes beinhaltet:
Deaktivieren des wenigstens einen Fahrzeugzubehörteils.

8. Verfahren zum Reagieren auf einen Fehlercode von einer Kamera an einem Fahrzeug nach Anspruch 1, das ferner, falls der Fehler nicht für den zuvor bestimmten Fehlerzeitraum bestehen bleibt, nach einem der Bestimmungsschritte Folgendes beinhaltet:
Deaktivieren des wenigstens einen Fahrzeugzubehörteils.

9. Verfahren zum Reagieren auf einen Fehlercode von einer Kamera an einem Fahrzeug nach Anspruch 1, wobei der Warnschritt Folgendes beinhaltet:
Beleuchten wenigstens eines Lichts auf einem Armaturenbrett eines Fahrzeugs, Aktivieren eines akustischen Signals und Anzeigen einer Textnachricht auf dem Armaturenbrett.

10. Verfahren zum Reagieren auf einen Fehlercode von einer Kamera an einem Fahrzeug nach Anspruch 1, das ferner Folgendes beinhaltet:
Einstellen der zuvor bestimmten Anzahl von Malen auf 5.

11. Steuervorrichtung zum Reagieren auf einen Fehler von einer Kamera an einem Fahrzeug, wobei die Steuervorrichtung für Folgendes angepasst ist:
Identifizieren des Fehlers als ein verdecktes visuelles Bild, das durch die Kamera empfangen wird;
wobei, falls der Fehler mit dem verdeckten visuellen Bild zusammenhängt, die Steuervorrichtung für Folgendes angepasst ist:
Übertragen eines Steuersignals, um wenigstens ein Fahrzeugzubehörteil zum Entfernen einer Verdeckung an einem Fenster des Fahrzeugs zu aktivieren und/oder fortgesetzt zu aktivieren;
nach der Aktivierung oder der fortgesetzten Aktivierung des wenigstens einen Fahrzeugzubehörteils, Bestimmen, ob der Fehler für einen zuvor bestimmten Fehlerzeitraum bestehen bleibt; und
falls der Fehler für den zuvor bestimmten Fehlerzeitraum bestehen bleibt, bis zu einer zuvor bestimmten Anzahl von Malen oder einer zuvor bestimmten Dauer, i) Wiederholen der Aktivierung oder der fortgesetzten Aktivierung und ii) Wiederholen der Bestimmung, wobei die Steuervorrichtung für Folgendes angepasst ist: Aktivieren des wenigstens einen Fahrzeugzubehörteils basierend auf einer Anzahl von Malen, wie oft die Aktivierung oder die fortgesetzte Aktivierung durchgeführt wurde; und
wobei, falls der Fehler für den zuvor bestimmten Fehlerzeitraum nach der zuvor bestimmten Anzahl von Malen oder den zuvor bestimmten Dauern bestehen bleibt, die Steuervorrichtung für Folgendes angepasst ist:
Deaktivieren des wenigstens einen Fahrzeugzubehörteils; und
Übertragen eines Signals, um einen Anwender des Fahrzeugs zu warnen, dass der Fehler bestehen bleibt,
**dadurch gekennzeichnet, dass**
die Steuervorrichtung für Folgendes angepasst ist:
Aktivieren nur eines Scheibenwischers, wenn der Schritt der Aktivierung oder der fortgesetzten Aktivierung zum ersten Mal durchgeführt wird;
Aktivieren nur des Scheibenwischers und eines Waschfluidspenders, wenn der Schritt der Aktivierung oder der fortgesetzten Aktivierung ein zweites Mal durchgeführt wird; und
Aktivieren des Scheibenwischers, des Waschfluidspenders und eines Heizers/Entfeuchters nach dem zweiten Mal, wenn der Schritt der Aktivierung oder der fortgesetzten Aktivierung durchgeführt wird.

12. Steuervorrichtung zum Steuern wenigstens eines Fahrzeugzubehörteils, wobei die Steuervorrichtung für Folgendes angepasst ist:
Empfangen eines Fehlercodes von einer Fahrzeugkamera;
Einstellen eines Zählers auf null;
wobei, falls der Fehlercode mit einem verdekten visuellen Bild verknüpft ist, bis i) der Fehlercode innerhalb eines zuvor bestimmten Fehlerzeitraums nach der Aktivierung oder der fortgesetzten Aktivierung des wenigstens einen Fahrzeugzubehörteils endet oder ii) der Zähler größer als oder gleich einem zuvor bestimmten Zählerstand ist, die Steuervorrichtung angepasst ist, um wiederholt:
einen Zählerstand des Zählers zu inkrementieren;
i) das wenigstens eine Fahrzeugzubehörteil zu aktivieren oder ii) die Aktivierung des wenigstens einen Fahrzeugzubehörteils basierend auf dem Zählerstand des Zählers fortzusetzen; und wobei, falls der Fehlercode innerhalb des zuvor bestimmten Fehlerzeitraums endet und der Zählerstand des Zählers kleiner als der zuvor bestimmte Zählerstand ist, die Steuervorrichtung für Folgendes angepasst ist:
Deaktivieren des wenigstens einen Fahrzeugzubehörteils; und
wobei, falls der Fehlercode nicht innerhalb des zuvor bestimmten Fehlerzeitraums endet und der Zählerstand des Zählers größer als oder gleich dem zuvor bestimmten Zählerstand ist, die Steuervorrichtung für Folgendes angepasst ist:
Deaktivieren des wenigstens einen Fahrzeugzubehörteils; und
Warnen eines Anwenders des Fahrzeugs, dass der Fehler bestehen bleibt,
**dadurch gekennzeichnet, dass**
um das wenigstens eine Fahrzeugzubehörteil zu aktivieren, die Steuervorrichtung ferner für Folgendes angepasst ist:
Aktivieren eines Scheibenwischers nur, falls der Zählerstand eins ist;
Aktivieren des Scheibenwischers und eines Waschfluidspenders nur, falls der Zählerstand zwei ist; und
Aktivieren des Scheibenwischers, des Waschfluidspenders und eines Heizers/Entfeuchters automatisch, falls der Zählerstand größer als zwei ist.

13. Steuervorrichtung nach Anspruch 12, wobei, falls der Fehlercode innerhalb des zuvor bestimmten Fehlerzeitraums endet und der Zählerstand des Zählers kleiner als der zuvor bestimmte Zählerstand ist, die Steuervorrichtung für Folgendes angepasst ist:
Zurückstellen des Zählers auf null.

## Revendications

1. Procédé permettant de répondre à un code d'erreur provenant d'une caméra sur un véhicule, le procédé comprenant :
l'identification de l'erreur comme étant associée à une image visuelle obstruée reçue par la caméra ;
si l'erreur est associée à l'image visuelle obstruée :
l'activation ou la poursuite de l'activation d'au moins un accessoire de véhicule pour éliminer une obstruction sur une vitre du véhicule ;
après l'activation ou l'activation continue de l'au moins un accessoire de véhicule, la détermination du fait de savoir si l'erreur persiste pendant une période de temps d'erreur prédéterminée ; et
si l'erreur persiste pendant la période de temps d'erreur prédéterminée, jusqu'à un nombre prédéterminé de fois ou jusqu'à une durée prédéterminée i) la répétition de l'étape d'activation ou de poursuite de l'activation et ii) la répétition de l'étape de détermination, l'étape d'activation ou de poursuite d'activation comportant :
l'activation de l'au moins un accessoire de véhicule sur la base du nombre de fois ou de la durée pendant laquelle l'étape d'activation ou de poursuite d'activation a été effectuée ; et
si l'erreur persiste après le nombre de fois prédéterminé ou la durée prédéterminée :
la désactivation de l'au moins un accessoire de véhicule ; et
le fait d'alerter un conducteur du véhicule que l'erreur persiste, **caractérisé en ce que**
l'activation de l'au moins un accessoire de véhicule sur la base du nombre de fois ou de la durée pendant laquelle l'étape d'activation ou de poursuite d'activation a été effectuée comporte :
l'activation uniquement d'un essuie-glace la première fois que l'étape d'activation ou de poursuite de l'activation est effectuée ;
l'activation uniquement de l'essuie-glace et d'un distributeur de liquide lave-glace une seconde fois que l'étape d'activation ou de poursuite de l'activation est effectuée ; et
l'activation de l'essuie-glace, du distributeur de liquide lave-glace et d'un dispositif de chauffage/d'un déshumidificateur après que la seconde étape d'activation ou de poursuite de l'activation est effectuée.

2. Procédé pour répondre à un code d'erreur provenant d'une caméra sur un véhicule selon la revendication 1, comportant en outre :
l'identification de l'image visuelle reçue par la caméra comme étant obstruée si moins d'une partie prédéterminée d'un objet identifié dans l'image visuelle est corrélée à un objet connu.

3. Procédé pour répondre à un code d'erreur provenant d'une caméra sur un véhicule selon la revendication 1, dans lequel l'étape d'activation comporte :
en réponse à un signal de commande ou à une activation d'un commutateur, l'activation d'un essuie-glace et/ou d'un distributeur de liquide lave-glace.

4. Procédé pour répondre à un code d'erreur provenant d'une caméra sur un véhicule selon la revendication 1, dans lequel l'étape d'activation comporte :
en réponse à un signal de commande ou à une activation d'un commutateur, l'activation d'un miroir chauffant/d'un déshumidificateur.

5. Procédé pour répondre à un code d'erreur provenant d'une caméra sur un véhicule selon la revendication 1, comportant en outre si l'erreur est associée à l'image visuelle obstruée : la désactivation de l'au moins un accessoire de véhicule à la fin de la période de temps d'erreur prédéterminée.

6. Procédé pour répondre à un code d'erreur provenant d'une caméra sur un véhicule selon la revendication 1 :
comportant en outre avant la première étape d'activation :
la mise à zéro d'un compteur et/ou d'un temporisateur ; et
comportant en outre avant chaque exécution de l'étape d'activation :
l'augmentation du compteur d'une unité et/ou la détermination du fait de savoir si le temporisateur a expiré.

7. Procédé pour répondre à un code d'erreur provenant d'une caméra sur un véhicule selon la revendication 6, comportant en outre, si l'erreur ne persiste pas pendant la période de temps d'erreur prédéterminée après l'une quelconque des étapes de détermination :
la désactivation de l'au moins un accessoire de véhicule.

8. Procédé pour répondre à un code d'erreur provenant d'une caméra sur un véhicule selon la revendication 1, comportant en outre, si l'erreur ne persiste pas pendant la période de temps d'erreur prédéterminée après l'une quelconque des étapes de détermination :
la désactivation de l'au moins un accessoire de véhicule.

9. Procédé pour répondre à un code d'erreur provenant d'une caméra sur un véhicule selon la revendication 1, dans lequel l'étape d'alerte comporte :
le fait d'allumer au moins l'une d'une lumière sur un tableau de bord d'un véhicule, l'activation d'un signal sonore et l'affichage d'un message textuel sur le tableau de bord.

10. Procédé pour répondre à un code d'erreur provenant d'une caméra sur un véhicule selon la revendication 1, comportant en outre :
le réglage du nombre de fois prédéterminé à 5.

11. Un dispositif de commande pour répondre à une erreur provenant d'une caméra sur un véhicule, le dispositif de commande étant adapté pour :
identifier l'erreur comme étant associée à une image visuelle obstruée reçue par la caméra ;
si l'erreur est associée à l'image visuelle obstruée, le dispositif de commande étant adapté pour :
transmettre un signal de commande pour activer et/ou poursuivre l'activation d'au moins un accessoire de véhicule afin de supprimer une obstruction sur une vitre du véhicule ;
après l'activation ou l'activation continue de l'au moins un accessoire de véhicule, déterminer si l'erreur persiste pendant une période de temps d'erreur prédéterminée ; et
si l'erreur persiste pendant la période de temps d'erreur prédéterminée, jusqu'à un nombre prédéterminé de fois ou une durée prédéterminée i) répéter l'activation ou l'activation continue et ii) répéter la détermination, le dispositif de commande étant adapté pour : activer l'au moins un accessoire de véhicule basé sur un certain nombre de fois que l'activation ou l'activation continue a été effectuée ; et
si l'erreur persiste pendant la période de temps d'erreur prédéterminée après le nombre de fois prédéterminé ou des durées prédéterminées, le dispositif de commande étant adapté pour :
désactiver l'au moins un accessoire du véhicule ; et
transmettre un signal pour alerter un opérateur du véhicule que l'erreur persiste,
**caractérisé en ce que**
le dispositif de commande est adapté pour :
activer uniquement un essuie-glace la première fois que l'activation ou l'activation continue est effectuée ;
activer uniquement l'essuie-glace et un distributeur de liquide lave-glace une seconde fois que l'activation ou la poursuite de l'activation est effectuée ; et
activer l'essuie-glace, le distributeur de liquide lave-glace et un dispositif de chauffage/un déshumidificateur après la seconde fois que l'activation ou la poursuite de l'activation est effectuée.

12. Dispositif de commande pour commander au moins un accessoire de véhicule, le dispositif de commande étant adapté pour :
recevoir un code d'erreur provenant d'une caméra de véhicule ;
mettre un compteur à zéro ;
si le code d'erreur est associé à une image visuelle obstruée, jusqu'à ce que i) le code d'erreur cesse dans une période de temps d'erreur prédéterminée après l'activation ou l'activation continue de l'au moins un accessoire de véhicule ou jusqu'à ce que ii) le compteur soit supérieur ou égal à un compte prédéterminé, le dispositif de commande étant adapté pour de façon répétée :
augmenter un compte du compteur ;
i) activer l'au moins un accessoire de véhicule ou ii) continuer l'activation de l'au moins un accessoire de véhicule sur la base du compte du compteur ; et si le code d'erreur cesse dans la période de temps d'erreur prédéterminée et que le compte du compteur est inférieur au compte prédéterminé, le dispositif de commande étant adapté pour :
désactiver l'au moins un accessoire du véhicule ; et
si le code d'erreur ne cesse pas dans la période de temps d'erreur prédéterminée et que le compte du compteur est supérieur ou égal au compte prédéterminé, le dispositif de commande étant adapté pour :
désactiver l'au moins un accessoire du véhicule ; et
alerter un opérateur du véhicule que l'erreur persiste,
**caractérisé en ce que**
pour activer l'au moins un accessoire de véhicule, le dispositif de commande est en outre adapté pour :
activer uniquement un essuie-glace si le compte est de un ;
activer uniquement l'essuie-glace et un distributeur de liquide lave-glace si le compte est de deux ; et
activer automatiquement l'essuie-glace, le distributeur de liquide lave-glace et un dispositif de chauffage/un déshumidificateur si le compte est supérieur à deux.

13. Dispositif de commande selon la revendication 12, dans lequel si le code d'erreur cesse dans la période de temps d'erreur prédéterminée et que le compte du compteur est inférieur au
compte prédéterminé, le dispositif de commande étant en outre adapté pour :
remettre le compteur à zéro.
